# EUROPEAN PATENT APPLICATION

(11) **EP 1 361 151 A1**
(43) Date of publication of application: **12.11.2003**
(21) Application number: 02076818.0
(22) Date of filing: 07.05.2002
(51) Int. Cl.: B63B 1/38

(54) **Air cavity vessel with air deflector**

(71) Applicant: DK Group N.A. N.V., Curaçao (AN)
(72) Inventor: Matveev, Konstantin, Pasadena, CA 91106 (US); Winkler, Joern Paul, c/o DK Group Netherl.B.V., 3012 NJ Rotterdam (NL)
(74) Representative: van Westenbrugge, Andries

(57) **Abstract**

The invention relates to an air cavity vessel (1) comprising a hull (3) with a bow (11), a stern (12) and a propeller (13) near the stern, at least one open cavity (4,5,6) being formed at the bottom (2) of the hull, and air injection means (7,10) for supplying air into the cavity. The vessel is provided with at least one air deflector (15,16,17), extending between the rearmost cavity (21,22) and the propeller (13), the deflector extending in a transverse direction from a longitudinal centre line (25) of the vessel to the sides of the vessel and having a sloping surface (27) extending from the hull (29) upwardly when going towards the stern (12).

## Description

The invention relates to an air cavity vessel comprising a hull with a bow, a stern, a propeller near the stern, at least one open cavity, which is formed at the bottom of the hull, and air injection means for supplying air into the cavity.

Such an air cavity vessel is known from US-A- 3,595,191 in which the bottom of the hull of a large ocean going vessel, such as an oil tanker, is provided with a number of downwardly opening air cavities into which compressed air is introduced. Hereby the water contact surface of the vessel is reduced and its hydrodynamic properties are improved, such as for instance a reduction of water resistance. When sailing, air escapes from the pockets as the vessel pitches and rolls. Also in calm waters, air will escape from the air cavities. The vessel is propelled by a submerged propeller, which is adversely affected by air reaching the propeller from the cavities , which reduces lift on the propeller blades, leading to thrust and torque fluctuations, or thrust breakdown (propeller racing) One solution to the problem of air reaching the propeller is the use of ventilated propellers or a "hydro air drive" such as described in US-A-5,505,639 (Burg patent). Such a ventilated propellers or "hydro air drives" are relatively complex. Furthermore, when an existing vessel is retrofitted with one or more air cavities, which are added to the hull, exchange of the propeller is an extensive and costly operation.

It is therefore an object of the invention to provide an air cavity vessel in which the ingress of air into the propeller area is reduced.

Hereto an air cavity according to the present invention is characterised in that the vessel is provided with at least one air deflector, extending between the rearmost cavity and the propeller, the deflector extending in a transverse direction from a longitudinal centre line of the vessel to the sides of the vessel and having a sloping surface extending upwardly from the hull when going towards the stern.

At the trailing edge of the sloping air deflector, which may for instance have a wedge-shaped cross section, a low pressure area is formed, along which air bubbles are transversely guided form the bottom of the hull, along the sides of the vessel to the water surface, without reaching the propeller. Hereby the propeller is effectively shielded from air escaping from the air cavities. A regular submerged, non-ventilated propeller can be used in conjunction with the air cavities, by use of the air deflector of the present invention, which forms an air barrier between the rearmost air cavity and the propeller. In this way, existing vessels, such as bulk carriers, can be retrofitted with one or more air cavities, which are welded to the bottom of the hull without having to resort to a redesign of the propeller.

In an embodiment, two or more air deflectors extend in parallel for effective transverse air transport from the hull bottom to the surface. The deflectors enclose a sharp angle α with the horizontal centreline in a rearward direction. Preferably, the angle α of the air deflector at the bottom of the hull differs from the angle of the air deflector with the longitudinal direction along the sides of the vessel. The angles α and β depend on the air escape at the design speed.

A non-limiting embodiment of the air deflector according to the present invention will be explained in detail, by way of example, with reference to the accompanying drawings. In the drawings:
Fig. 1 shows a side view of a tanker or bulk carrier vessel comprising air cavities, and an air deflector according to the present invention,
Fig. 2 shows a bottom view of the vessel of Fig.1, and
Fig. 3 shows a cross-sectional view of the air deflector along line III-III in Fig. 2.

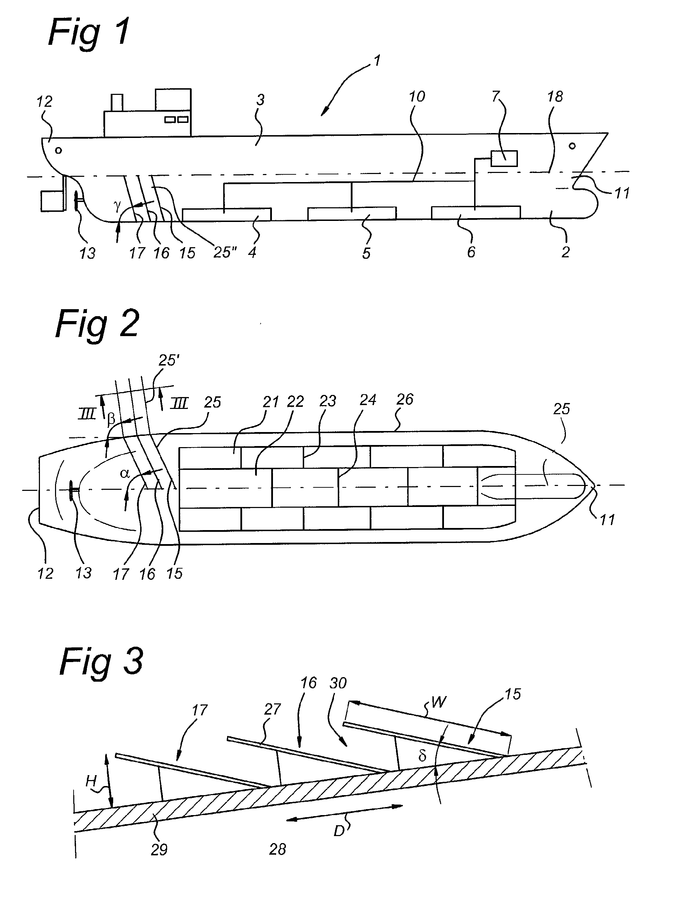

In Fig. 1 an oil tanker or bulk carrier 1 is shown, which may have a tonnage of for instance between 50.000 and 500.000 ton. At the bottom 2 of the hull 3, the vessel comprises a number of air cavities 4,5,6 which are open at their downward facing surfaces. Via a compressor 7, compressed air is injected into the cavities 4-6 via a series of ducts 10. Each cavity may have a length of about 0.5 - 30 m, a width of about 0.5 - 20 m and a depth of about 0.3 - 5 m. The height of the cavities is such that at maximum trim the cavities are still completely filled with air, and will in general correspond with the height of a computed wave crest inside the cavity. The width of the cavities is such that at least two rows of cavities extend in the length of the vessel, when seen in the width direction. The length Lc of the cavities of a slow sailing non-fin-stabilised monohull vessel at design speed v of the vessel may be given by Lc = 0.34 v².

The air is supplied at a pressure of 1.5 - 4 bar, and is slightly larger than the hydrostatic pressure in the cavity at the corresponding draught of the vessel. The rate of the air supply is such as to keep each cavity as dry as possible under the given conditions (speed, sea state. etc.), and will be trapped in a stable situation in each air cavity, excess air escaping from the rear parts of each cavity.

At the bow 11 the vessel 1 comprises a bulbous portion is provided, reducing water resistance, and at the stern 12, a submerged, non ventilated propeller 13 drives the vessel at speeds of between 8 and 30 knots. Near the stern 13, between the rearmost air cavity 4 and the propeller 13, three parallel air deflectors 15,16,17 extend along the outside surface of the hull, obliquely in a rearward direction at an angle γ with the horizontal, for guiding air escaping from the cavities 4-6, parallel to the deflectors, from the bottom 2 towards the water surface 18. This prevents air from entering into the propeller plane and keeps the air level at the propeller 13 lower than for instance 10% by volume. In this way, no special design modifications to the propeller need to be made, which is of advantage when the air cavities 4-6 are retrofitted onto an existing vessel.

As can be seen in Fig. 2, a number of air cavities 21, 22 extends at the bottom of the vessel, wherein the transverse partitions 23, 24 of the outer and inner cavities are offset in the direction of longitudinal centre line 25 for optimum wave shaping in the cavities. The transverse partitions 23,24 may be of wedge-shaped cross-section, the depth of each cavity gradually decreasing towards the rear of each cavity.

Between the rearmost cavities 21 and the propeller 13, the three wedge-shaped air deflectors 15, 16,17 extend at an acute angle α of for instance 80° - 110° with the longitudinal centre line 25, towards the tanging line 26, which is formed by the boundary of the substantially horizontal bottom part of the hull 1. In Fig. 2, the lower part 25 and intermediate part 27 of the air deflectors on only one side of the vessel are shown, while in actual fact the air deflector lay-out is symmetrical about the longitudinal centre line 18. From the tanging line 26, the air deflectors 15-17 extend with their intermediate parts 25' at an angle β with the longitudinal direction, along the sides of the hull, for instance up to water level 18. The angle β depends on the design speed of the vessel and the upward velocity of air bubbles in water. The upper parts 25" of the air deflectors 15-17 extends at an angle γ to the vertical, as can be seen in Fig. 1. The angles α, β and γ depend on the vessel design, such as the design speed and the air escape angle at the design speed and are laid out to guide the air bubbles to the surface without a transverse acceleration.

As can be seen from Fig. 3, the air deflectors 15-17 comprise a wedge shaped cross section, and are formed by a sloping strip 27 and a transverse strip 28, which are welded to the wall 29 of the hull 3. The width W of each strip may be 0.3 - 3 m while the height h of the rearmost part above the hull wall 29 is determined by the average amount of air escaping from the last cavity and may be 0.1 - 2 m, whereas the distance D between the deflectors may be 0.1 - 10 m and the angle δ with the hull wall 29 is 10° -90°.

At the rear ends 30 of the air deflectors 15-17 a low-pressure zone is formed, in which air bubbles are trapped. The trapped air is guided in the low-pressure zone, along the deflectors, from the bottom 2 to the sea surface 18, such that air ingress into the zone of propeller 13 is prevented.

## Claims

1. Air cavity vessel (1) comprising a hull (3) with a bow (11), a stem (12) and a propeller (13) near the stern, at least one open cavity (4,5,6) being formed at the bottom (2) of the hull, and air injection means (7,10) for supplying air into the cavity, **characterised in that** the vessel is provided with at least one air deflector (15,16,17), extending between the rearmost cavity (21,22) and the propeller (13), the deflector extending in a transverse direction from a longitudinal centre line (25) of the vessel to the sides of the vessel and having a sloping surface (27) extending from the hull (29) upwardly when going towards the stern (12).

2. Air cavity vessel (1) according to claim 1, wherein at least two deflectors (15,16,17) extend substantially in parallel at a predetermined mutual distance (D).

3. Air cavity vessel (1) according to claim 1 or 2, wherein the deflector (15,16,17) extends at a sharp angle (α) towards the stern.

4. Air cavity vessel (1) according to claim 3, wherein the deflector extends at a first angle with the longitudinal centre line (25), along the bottom (2) of the hull (3), and at a second angle (β) with the longitudinal direction, different from the first angle (α), along the substantially vertical sides of the hull (3).

5. Air cavity vessel (1) according to any of the preceding claims, wherein the deflector (15-17) extends to water level (18).

6. Air cavity vessel (1) according to any of the preceding claims, wherein the at least one air cavity comprises a front, rear and side boundaries which have been connected to the bottom of the hull.

7. Air cavity vessel (1) according to claim 7, the propeller (13) comprising a non-ventilated propeller.
